# EUROPÄISCHE PATENTANMELDUNG

(11) **EP 1 081 925 A2**
(43) Veröffentlichungstag der Anmeldung: **07.03.2001**
(21) Anmeldenummer: 00118493.6
(22) Anmeldetag: 25.08.2000
(51) Int. Cl.: H04M 3/42

(54) **Verbindungsverwaltung in einem Telekommunikationsnetz**

(30) Priorität: 31.08.1999 DE 19941245
(71) Anmelder: Tenovis GmbH & Co. KG, 60362 Frankfurt (DE)
(72) Erfinder: Wiese, Garrelt, 64297 Darmstadt (DE); Weirauch, Andreas, 80686 München (DE)
(74) Vertreter: Bohnenberger, Johannes, Dr.

(57) **Zusammenfassung**

Es wird ein Verfahren zum Aufbauen und/oder Verwalten einer Verbindung zwischen einem ersten und einem zweiten Knoten eines Telekommunikationsnetzes aufgezeigt, wobei die Knoten programmgesteuert arbeiten. Es wird vorgeschlagen, daß der erste Knoten den zweiten Knoten, um ihn zu einer Handlung zu veranlassen, mittels einer ersten Referenz einen Programmteil des zweiten Knotens aufruft, der die Programmschritte enthält, die für die auszuführende Handlung erforderlich sind, und der zweite Knoten, den durch die erste Referenz bezeichneten Programmteil ausführt.

## Beschreibung

### Stand der Technik

Die Erfindung betrifft ein Verfahren zum Aufbauen und/oder Verwalten einer Verbindung zwischen einem ersten und einem zweiten Knoten eines Telekommunikationsnetzes, dessen Knoten programmgesteuert arbeiten, sowie ein Telekommunikationsnetz, das geeignet ist, nach einem solchen Verfahren zu arbeiten.

Der Aufbau und die Kontrolle von Verbindungen in Telekommunikationsnetzen zwischen Knoten wie etwa Endgeräten und Vermittlungsstellen wird derzeit mit Hilfe von Protokollmeldungen gesteuert. Dabei kommen verschiedene Protokolle wie etwa EDSS1/Q931 (ISDN), H.323, etc. zum Einsatz. Für Rufsteuerungen und Rufüberwachung in Callcenter-Anwendungen werden meldungsorientierte Protokolle wie zum Beispiel CSTA eingesetzt.

Damit eine Meldung, die von einem ersten Knoten an einen zweiten geschickt wird, beim zweiten Knoten richtig verarbeitet werden kann, muß sichergestellt sein, daß dieser sich in einer Phase seiner Programmsteuerung befindet, die eine korrekte Reaktion auf die jeweilige Meldung erlaubt. Da die existierenden Schnittstellenbeschreibungen für Protokollschnittstellen nach den gängigen Normen an diversen Stellen Interpretationsspielraum lassen, der von den Herstellern zum Teil unterschiedlich genutzt wird, ist es oft problematisch, Telekommunikationsprodukte verschiedener Hersteller in ein funktionierendes Gesamtsystem zu integrieren. Der Entwicklungsaufwand für derartige Schnittstellen ist erheblich.

### Vorteile der Erfindung

Durch die Erfindung werden ein Verfahren zur Verbindungsverwaltung und ein zum Arbeiten nach dem Verfahren geeignetes Kommunikationsnetz vorgeschlagen, bei denen die Interoperabilitätsprobleme weitgehend entschärft sind und die Entwicklung der Schnittstellen vereinfacht ist.

Dieses Ziel wird dadurch erreicht, daß die Knoten des Netzes nicht durch Übergabe von Meldungen miteinander in Wechselwirkung treten, die von einem empfangenden Knoten nur dann korrekt ausgewertet werden können, wenn er sich in einem zur Entgegennahme einer solchen Meldung geeigneten Programmzustand befindet, sondern durch Übergabe von Referenzen, die dem die Referenz empfangenden Knoten einen unmittelbaren Verweis auf einen Programmteil seines eigenen Steuerprogramms liefern, der abgearbeitet werden muß, um auf das Übergabeereignis korrekt zu reagieren, zum Beispiel durch Ausführen bestimmter Handlungen oder Einrichten eines bestimmten Zustands des empfangenden Knotens. Für das ordnungsgemäße Funktionieren des empfangenden Knotens muß daher auf dessen Seite im wesentlichen gewährleistet sein, daß er aber die für die korrekte Reaktion auf ein Übergabeereignis erforderlichen Programmteile verfügt, die "Verantwortung" dafür, daß der empfangende Knoten die richtigen Programmteile ausführt, liegt beim sendenden Knoten, denn dieser muß die korrekte Referenz bereitstellen.

Wenn eine Verbindung zwischen zwei Knoten besteht, ist es nicht schwierig, sicherzustellen, daß ein übergebender Knoten stets über die korrekte Referenz verfügt. Es genügt hierfür, wenn der erste von zwei miteinander kommunizierenden Knoten neben der Referenz auf den vom zweiten Knoten auszuführenden Programmteil zusätzlich einen Parameter an den zweiten Knoten übergibt, der eine zweite Referenz auf einen Programmteil des ersten Knotens darstellt, von dem der erste Knoten "weiß", daß er in Reaktion auf die Antwort des zweiten Knotens ausgeführt werden muß. Es genügt daher, daß der zweite Knoten nach Ausführung des von ihm verlangten Programmteils diese zweite Referenz an den ersten zurückübergibt, so daß der erste den dadurch referenzierten Programmteil ausführen kann.

Um eine Verbindung zwischen zwei Knoten aufzubauen, wird eine erste Referenz benötigt, die der erste Knoten zwangsläufig noch nicht vom zweiten Knoten als Parameter übergeben bekommen kann. Diese erste Referenz fragt der erste Knoten daher zweckmäßigerweise aus einer Datenbank ab. Diese Datenbank enthält für jeden Knoten des Telekommunikationsnetzwerks jeweils wenigstens eine Referenz, die ein Programmteil des Knotens bezeichnet, das zum Aufbauen einer Verbindung mit diesem Knoten ausgeführt werden muß.

Die Beschreibung des Verhaltens einer Schnittstelle eines Knotens kann, da dieser programmgesteuert arbeitet, rein in sprachlicher beziehungsweise programmiersprachlicher Form erfolgen. Da eine solche Form der Beschreibung eindeutiger ist als eine einfache Protokollspezifikation, und von einem einheitlicher Compiler auch einheitlich übersetzt wird, besteht weniger Spielraum für Detailunterschiede im Verhalten von Knoten unterschiedlicher Hersteller, so daß bereits aus diesem Grunde es beim erfindungsgemäßen Verfahren einfacher als bisher ist, die Interoperabilität von Knoten verschiedener Hersteller zu gewährleisten.

Falls als Programmsprache Java benutzt wird, kann ein für einen bestimmten Typ von Knoten entwickeltes Steuerprogramm ohne Portierungsaufwand auf beliebige andere Plattformen übertragen werden.

Eine Vielzahl von Leistungsmerkmalen gegenwärtiger Telekommunikationsnetze sind im Rahmen des erfindungsgemäßen Verfahrens verblüffend einfach zu realisieren.

Normalerweise werden bei einer bestehenden Verbindung zwischen zwei Knoten diese Knoten jeweils aneinander Referenzen auf eigene Programmteile übergeben. Falls jedoch ein Knoten an den anderen als Parameter eine Referenz auf einen Programmteil eines dritten Knotens übergibt, so hat dies zur Folge, daß der angesprochene Knoten nach Abarbeitung des referenzierten Programmteils anhand der Referenz den dritten Knoten aufruft. Auf diese Weise kann zum Beispiel eine Weiterschaltung eines vom zweiten Knoten ursprünglich an den ersten gerichteten Anrufs an einen dritten Knoten erfolgen.

Wenn ein angerufener Knoten besetzt ist, kann er eine von einem anrufenden Knoten als Parameter übergebene, auf den anrufenden Knoten verweisende Referenz zwischenspeichern und nach Freiwerden unter Verwendung dieser zwischengespeicherten Referenz seinerseits eine Verbindung mit dem anderen Knoten aufbauen. Auf diese Weise läßt sich eine Rückruf-bei-besetzt-Funktion implementieren.

Weitere Merkmale und Vorteile der Erfindung ergeben sich aus der nachfolgenden Beschreibung eines Ausführungsbeipiels mit Bezug auf die Figuren.

### Figuren

- Figur 1: zeigt schematisch ein erfindungsgemäßes Telekommunikationsnetz;
- Figuren 2a bis c: zeigen Phasen des Aufbaus einer einfachen Gesprächsverbindung zwischen zwei Knoten des Telekommunikationsnetzes;
- Figuren 3a bis d: zeigen Phasen einer Anrufweiterschaltung; und
- Figuren 4a bis d: zeigen Phasen eines Ruftransfers.

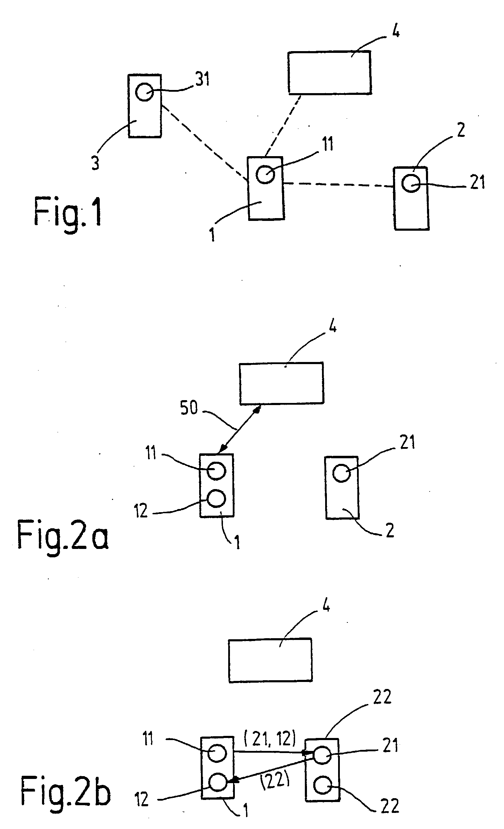

1,2 und 3 in Figur 1 stellen jeweils Knoten des Telekommunikationsnetzwerks dar, und 4 ist eine Datenbank. Gestrichelte Linien stellen jeweils einige der möglichen Verbindungen zwischen den Komponenten 1 bis 4 dar.

Die Knoten 1 bis 3 sind programmgesteuert, wobei das Steuerprogramm eine Mehrzahl von Programmteilen für verschiedene Aufgaben im Rahmen des Gesprächsaufbaus und der Gesprächsverwaltung umfaßt, die zweckmäßigerweise als Objekte im Sinne objektorientierter Programmierung organisiert sind. Die Kreise innerhalb der Knoten 1 bis 3 repräsentieren jeweils zentrale Teilnehmerzugangsobjekte 11,21,31, deren Aufgabe die Entgegennahme und Verarbeitung von Verbindungsanforderungen durch andere Knoten ist.

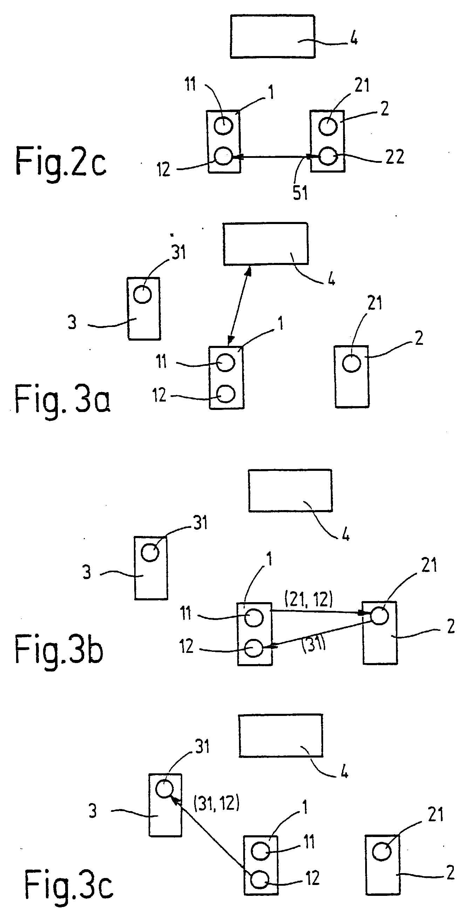

Figur 2 zeigt anhand von drei Phasen a,b,c die Einrichtung einer Gesprächsverbindung zwischen zwei Knoten 1 und 2 des Netzwerks. Wenn ein Teilnehmer am Knoten 1 eine Verbindung aufbauen will und beispielsweise einen Telefonhörer abhebt, erzeugt der Knoten 1 ein Verbindungsobjekt 12 als eigenständigen Programmteil. Anhand des vom Benutzer spezifizierten Namens beziehungsweise der Rufnummer des gewünschten Verbindungspartners fragt der Knoten 1 eine Datenbank 4 ab, die eine Referenz auf das Teilnehmerzugangsobjekt 21 des gewünschten Knotens 2 zurückliefert. Dieser Vorgang ist durch den Doppelpfeil 50 in Figur 2a symbolisiert.

Wie in Figur 2b gezeigt, führt nun der Knoten 1 einen synchronen Aufruf des durch die zurückgelieferte Referenz referenzierten Teilnehmerzugangsobjekts 21 des Knotens 2 aus. Dabei wird eine Referenz auf das eigene Verbindungsobjekt 12 des Knotens 1 als Parameter übergeben. Nach dem Aufruf geht der Knoten 1 in einen Wartezustand über, in der er auf den oder die Rückgabeparameter wartet, die das Teilnehmerzugangsobjekt 21 des Knotens 2 liefert. Ein herkömmlicher, aufwendiger Protokollstack, der in der Lage ist, an einem Knoten eingehende Meldungen auszuwerten und je nach Bedeutung der Meldung unterschiedliche Handlungen des Knotens auszulösen, ist deshalb erfindungsgemäß verzichtbar.

Der Knoten 2 reagiert auf den Aufruf, indem er eine Methode zum Initiieren einer Verbindung ausführt, in deren Verlauf ein eigenes Verbindungsobjekt 22 im Knoten 2 erzeugt wird. Nach Ausführung der Methode übergibt der Knoten 2 eine Referenz auf sein eigenes Verbindungsobjekt 22 als Rückgabeparameter des synchronen Aufrufs.

Beide Knoten verfügen nun jeweils über die Referenzen, die notwendig sind, um die Verbindungsobjekte 12,22 des jeweils anderen Knotens anzusprechen. Die Steuerung der Verbindung findet durch wechselseitige Aufrufe der Verbindungsobjekte des jeweils anderen Knotens statt, wie in Figur 2c durch den Doppelpfeil 51 symbolisiert.

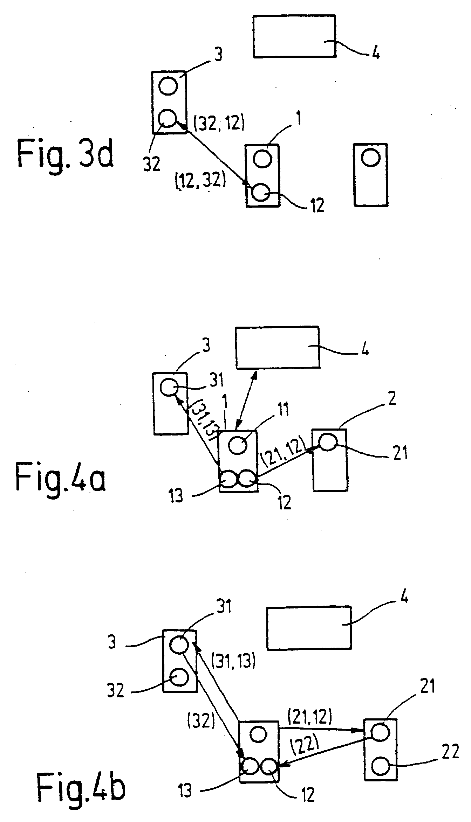

Figuren 3a bis d veranschaulichen das Zustandekommen einer Verbindung zwischen zwei Knoten über eine Rufweiterleitung. Die in Figur 3a dargestellte Ausgangssituation entspricht der der Figur 2a: Der Knoten 1 versucht, eine Verbindung zum Knoten 2 aufzubauen und fragt zu diesem Zweck die Referenz des Teilnehmerzugangsobjekts 21 des Knotens 2 von der Datenbank 4 ab.

In Figur 3b führt der Knoten 1 einen synchronen Aufruf des Teilnehmerzugangsobjekts 21 aus und übergibt dabei die Referenz seines eingerichteten Verbindungsobjekts 12 als Parameter.

Im Knoten 2 ist eine Rufweiterleitung zum Knoten 3 programmiert. Das Teilnehmerzugangsobjekt 21 des Knotens 2 richtet deshalb kein eigenes Verbindungsobjekt ein, sondern gibt an den Knoten 1 als Rückgabeparameter eine Referenz auf das Teilnehmerzugangsobjekt 31 des Knotens 3 zurück. Um diese Referenz zu erhalten, kann der Knoten 2 in Reaktion auf die Übergabe vom Knoten 1 die Datenbank 4 abfragen; eine solche Abfrage kann aber auch bereits im Rahmen der Programmierung der Rufweiterleitung erfolgt sein, und die entsprechende Referenz wird im Knoten 2 für die Dauer der Aufrechterhaltung der Rufweiterleitung gespeichert.

Wie Figur 3c zeigt, übergibt das Verbindungsobjekt 12 anschließend an die als Parameter erhaltene Referenz 31 und nimmt auf diese Weise Verbindung mit dem Knoten 3 auf. Dieser reagiert durch Einrichten eines Verbindungsobjekts 32, das als Parameter an das Verbindungsobjekt 12 zurück übergeben wird. Die Steuerung der Verbindung zwischen den zwei Knoten 1 und 3 findet von nun an durch wechselseitige Aufrufe der Verbindungsobjekte 12,32 statt.

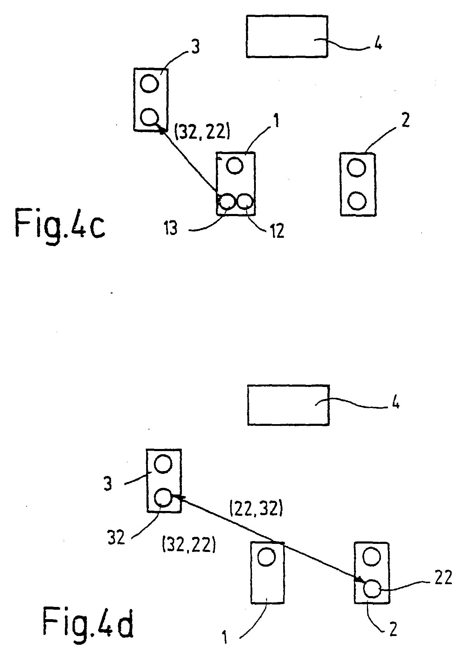

Figur 4 zeigt den Ablauf eines Verbindungstransfers. Die Verbindung soll vom Knoten 1 aus zwischen den zwei Knoten 2 und 3 hergestellt werden. Der Knoten 1 richtet in Figur 4a zwei Verbindungsobjekte 12 und 13 ein und fragt Referenzen der Knoten 2 und 3 von der Datenbank 4 ab.

Der Aufruf der Teilnehmerzugangsobjekte 21,31 läuft in analoger Weise wie in Figur 2b und 3b ab. Beide angesprochenen Knoten 2 und 3 richten Verbindungsobjekte 22,32 ein und geben deren Referenzen als Parameter im Rahmen des synchronen Aufrufs an die Verbindungsobjekte 12,13 zurück, wie in Figur 4b dargestellt.

In der in Figur 4c gezeigten Phase übergibt eines der Verbindungsobjekte des Knotens 1, hier das Objekt 13, die vom anderen Verbindungsobjekt 12 als Rückgabeparameter erhaltene Referenz auf das Verbindungsobjekt 22 an das Verbindungsobjekt 32 weiter. Das Verbindungsobjekt 32 ruft daher in der Folge das Objekt 22 auf, und eine Verbindung zwischen den Knoten 2 und 3 kommt zustande. Die nicht mehr benötigten Verbindungsobjekte 12,13 des Knotens 1 werden aufgehoben.

Das hier beschriebene Prinzip der Übergabe von Referenzen und Parametern läßt sich auf eine Vielzahl weiterer Funktionen von Telekommunikationsnetzen ausdehnen, zum Beispiel den Betrieb von Callcentern. Herkömmliche Callcenterlösungen bestehen aus einem externen Verwaltungsprogramm, das über einen CSTA-Link mit einer Vermittlungsanlage verbunden ist, an den die Callcenter-Agents angeschlossen sind. Da alle Gespräche über die Vermittlungsanlage laufen, können sie überwacht und die Information darüber an das externe Programm weitergeleitet werden, um so einen eintreffenden Anruf an einen freien Agent vermitteln zu können. Umgekehrt kann dieses externe Programm über die Vermittlungsanlage auch Verbindungen zwischen den Agents oder zu einem externen Gateway aufbauen. Bei einem erfindungsgemäßen Telekommunikationssystem melden sich die Callcenter-Agents direkt bei dem Verwaltungsprogramm an und erhalten jeweils eine Referenz auf ein in diesem Verwaltungsprogramm gehaltenes Verbindungsüberwachungsobjekt. Diesem Objekt teilen die Callcenter-Agents ihren aktuellen Verbindungsstatus mit. Umgekehrt kann das Verwaltungsprogramm die Agents dazu veranlassen, Verbindungen aufzubauen. Mit dieser Technik ist es leicht möglich, Endgeräte fernzusteuern.

Mit Hilfe der oben erläuterten Prinzips der Verbindungsverwaltung können auch völlig neue Leistungsmerkmale in einem Telekommunikationsnetzwerk realisiert werden, insbesondere Merkmale aus dem Gebiet der Computer-Netzwerktechnik.

So ist es zum Beispiel möglich, eine Mailbox zu implementieren, indem ein Knoten bei Nichtannahme einer Verbindung ein entsprechendes Objekt einrichtet, und eine Referenz darauf an den anrufenden Knoten übergibt. Dies kann einem Benutzer zum Beispiel dadurch erkennbar gemacht werden, daß sich ein Fenster auf einem Bildschirm des von ihm verwendeten Endgeräts öffnet, und er aufgefordert wird, in das Fenster eine Mail einzugeben.

Im Rahmen einer Telefonkonferenz kann ein Teilnehmer ein Datenobjekt, das heißt ein Dokument oder eine Datei, an seinem Endgerät kennzeichnen, zum Beispiel mit Hilfe einer Maus, und es so für andere Konferenzteilnehmer aus einem Anzeigeschirm ihrer Endgeräte sichtbar machen. Wenn diese das Datenobjekt haben möchten, können sie es auf der Anzeigefläche ebenfalls markieren und auf diese Weise in ihr Endgerät kopieren. Das Datenobjekt wird dann entweder einfach als Parameter über einen Methodenaufruf an das Verbindungsobjekt weitergereicht, oder es wird zum Beispiel mittels File-Transfer dorthin kopiert.

## Patentansprüche

1. Verfahren zum Aufbauen und/oder Verwalten einer Verbindung zwischen einem ersten und einem zweiten Knoten (1,2) eines Telekommunikationsnetzes, wobei die Knoten programmgesteuert arbeiten, **dadurch gekennzeichnet,** daß der erste Knoten (1) den zweiten Knoten (2), um ihn zu einer Handlung zu veranlassen, mittels einer ersten Referenz einen Programmteil (21) des zweiten Knotens (2) aufruft, der die Programmschritte enthält, die für die auszuführende Handlung erforderlich sind, und der zweite Knoten (2), den durch die erste Referenz bezeichneten Programmteil (21) ausführt.

2. Verfahren nach Anspruch 1, **dadurch gekennzeichnet,** daß der erste Knoten (1) ferner einen Parameter an den zweiten Knoten (2) übergibt, der eine zweite Referenz auf einem Programmteil (12) des ersten Knotens darstellt, und der zweite Knoten (2) nach Ausführung des durch die erste Referenz bezeichneten Programmteils (21) die zweite Referenz an den ersten Knoten (1) übergibt, um ihm die Ausführung des durch die zweite Referenz bezeichneten Programmteils (12) zu ermöglichen.

3. Verfahren nach Anspruch 2, **dadurch gekennzeichnet,** daß der zweite Knoten (2) ferner an den ersten Knoten einen Parameter übergibt, der eine dritte Referenz auf einen Programmteil (22,31) darstellt, der im Anschluß an den durch die zweite Referenz bezeichneten Programmteil (12) ausgeführt werden soll.

4. Verfahren nach Anspruch 3, **dadurch gekennzeichnet,** daß die dritte Referenz auf einen Programmteil (22) des zweiten Knotens (2) verweist.

5. Verfahren nach Anspruch 3, **dadurch gekennzeichnet,** daß die dritte Referenz auf einen Programmteil (31) eines dritten Knotens (3) verweist.

6. Verfahren nach einem der vorhergehenden Ansprüche, **dadurch gekennzeichnet,** daß beim Aufbau einer Verbindung der erste Knoten (1) die an den zweiten Knoten (2) zu übergebene erste Referenz (22) zuvor aus einer Datenbank (4) abfragt.

7. Verfahren nach einem der vorhergehenden Ansprüche, **dadurch gekennzeichnet,** daß der zweite Knoten (2), falls er besetzt ist, die als Parameter übertragene zweite Referenz zwischenspeichert und nach Freiwerden unter Verwendung der zweiten Referenz seinerseits eine Verbindung mit dem ersten Knoten (1) aufbaut.

8. Verfahren nach einem der vorhergehenden Ansprüche, **dadurch gekennzeichnet,** daß die Programmteile (11,12,21,22,31,32) Objekte sind, und daß beim Aufbau jeder Verbindung ein der Verbindung entsprechendes Objekt (12,22,32) an den an der Verbindung beteiligten Knoten (1,2,3) erzeugt wird.

9. Telekommunikationsnetzwerk mit einer Mehrzahl von programmgesteuert arbeitenden Knoten (1,2,3), die in der Lage sind, jeweils durch Programmteile (11,12,13,21,22,31,32) definierte Handlungen auszuführen, **dadurch gekennzeichnet,** daß ein Knoten (1) an einen zweiten Knoten (2), um ihn zu einer Handlung zu veranlassen, eine Referenz auf den die Handlung definierenden Programmteil übergibt.

10. Telekommunikationsnetzwerk nach Anspruch 9, **dadurch gekennzeichnet,** daß es eine Datenbank (4) mit Referenzen der einzelnen Knoten (1,2,3) umfaßt, die für jeden Knoten (1,2,3) ein Programmteil (11,21,31) des Knotens (1,2,3) bezeichnet, das zum Aufbauen einer Verbindung mit dem Knoten (1,2,3) ausgeführt werden muß.
